# EUROPEAN PATENT SPECIFICATION

(11) **EP 1 024 313 B1**
(45) Date of publication and mention of the grant of the patent: **29.06.2005**
(21) Application number: 00300543.6
(22) Date of filing: 26.01.2000
(51) Int. Cl.: F16G 11/10

(54) **Cord stopper**
Seilklemme
Dispositif de blocage de corde

(30) Priority: 26.01.1999 FR 9900834
(43) Date of publication of application: 02.08.2000
(73) Proprietor: YKK Europe Limited, London EC1V 8AN (GB)
(72) Inventor: Murata, Koji, Seclin (FR)
(74) Representative: Luckhurst, Anthony Henry William

(56) References cited:
- EP-A- 0 013 693
- WO-A-98/30815
- DE-U- 9 401 623
- US-A- 5 283 930
- US-A- 5 669 119
- PATENT ABSTRACTS OF JAPAN vol. 1996, no. 08, 30 August 1996 (1996-08-30) & JP 08 089316 A (SUKOOBILL JAPAN KK), 9 April 1996 (1996-04-09)

## Description

The present invention relates to a cord stopper.

When using cord stoppers, particularly on garments, the stopper and its associated length of cord is usually left to dangle. This can be annoying, and potentially dangerous in that the stopper may become caught or trapped in a door, etc., as the wearer moves around.

JP-A-5-58008 describes a device, similar in construction to a cord stopper, which is used to trap the free ends of a bootlace (in place of tying a knot). This is attached to the tongue of the boot.

JP-A-8-89316 shows several mechanisms for attaching a cord stopper to a garment. These are in the form of a cup or sleeve into which the stopper is slid, holes on a wing of the stopper casing for use in attaching the stopper to a garment, or an eye or channel which receives a strap which in turn is sewn to the garment. These systems require the manufacture of an additional part, such as a plastics sleeve or cup which is attached to the garment, or provision of a loop which in turn must be sewn to the garment with the cord stopper attached. This operation is difficult.

US-A-5 283 930 describes a cord clamp with an integral hook, comprising two hinged portions which pivot between an open and a closed position. DE-94 01 623 U describes a cord stopper having an eye through which a strap can be fed, the strap in turn being sewn to a garment.

The present invention provides a cord stopper comprising a casing having opposed apertures for receiving a cord and a slider movable within the casing under the action of a spring to releasably trap the cord between the slider and an edge of the apertures, characterised in that the cord stopper further comprises a clip for attaching the cord stopper to a garment, bag or other item on which the cord stopper is to be used.

Preferably the garment, bag or other item incorporates a loop, like a belt loop, and the clip is used to clip the cord stopper to the loop.

Preferably the clip is integrally formed with a casing of the cord stopper. Very preferably the clip comprises two overlapping arms, and a loop of material, or the like, is slid between the overlapping arm portions to attach the cord stopper.

The invention will be further described by way of example with reference to the accompanying drawings, in which:
Figure 1 is a side view of a cord stopper forming an embodiment of the invention,
Figure 2 is a cross-section along the line II-II of Figure 1;
Figure 3 illustrates the cord stopper of Figure 1 mounted on a garment, and
Figure 4 illustrates a second embodiment of a cord stopper in accordance with the invention.

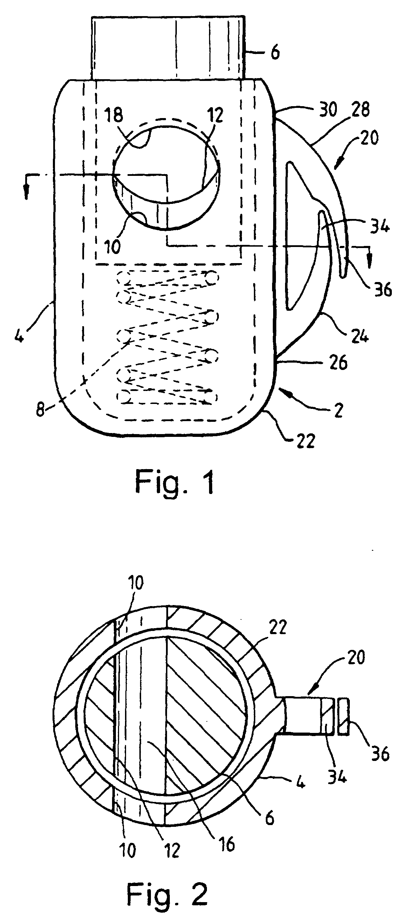

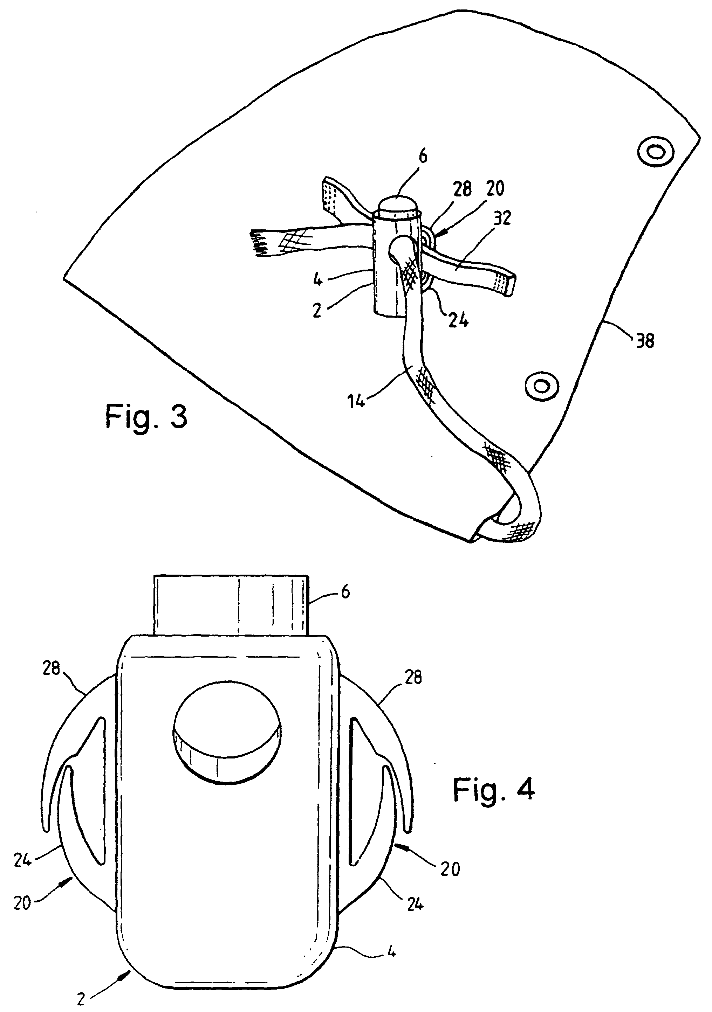

Figures 1 and 2 illustrate a cord stopper 2 which comprises a casing 4 in the form of a blind bore and a slider 6 which moves within the casing 4 under the action of a spring 8. The casing 4 and slider 6 may be injection moulded of plastics material. Diametrically opposed apertures 10 in the casing 4 align with a through aperture 12 in the slider 6 when the slider 6 is depressed against the force of the spring 8. A cord 14 (see Figure 3) is passed through the apertures 10, 12. When the slider 6 is released, the slider is urged by the spring to trap the cord 14 between the lower surface 16 of the aperture 12 and the upper edges 18 of the apertures 16, as seen in the drawings. The construction thus far described is well known in the art.

A clip 20 is integrally formed on the outer surface 22 of the casing 4. The clip 20 comprises a first arm 24 which extends upwardly from a lower region 26 of the casing, and a second arm 28 which extends down from an upper region 30 of the casing 4, the ends 34, 36 of the arms 24, 28 overlapping. The arms are somewhat resilient so that they can be urged apart slightly to slip a loop of material 32 (see Figure 3) between the arms 24, 28 where they overlap.

Referring to Figure 3, a cord stopper 2 is mounted on a cord 14 of a garment 38 such as a coat. A loop of material 32, similar to a belt loop, is sewn to the garment 38. The casing 4 is clipped on to the loop 32 by sliding the loop between the ends 34, 36 of the arms 24, 28. The loop 32 can sit loosely in the space between the arms 24, 28 and the casing 2, or a tighter fit may be provided for.

The embodiment of Figures 1 and 2 is 'handed' when it is mounted on the cord 14 as seen in Figure 3. Figure 4 shows a second embodiment of the cord stopper. In this embodiment the stopper has two clips 20, disposed on opposite sides of the casing 4 so that in either orientation of the cord stopper on the cord 14, a clip 20 is available to attach to the loop 32 without unnecessarily twisting the cord 14.

Various modifications will be apparent to those skilled in the art. For example, a clip may be in the form of a single arm extending in an arc from a point of attachment to the casing to a free end adjacent the casing. Such an arrangement would be easier to disconnect from the garment loop, or the like, if this was desired. Also, the clip may be of different material to the casing, for example a metal clip attached to a plastics casing.

The invention provides a cord stopper which can be readily attached to a garment or the like. A mounting loop can be sewn on the garment before the cord stopper is clipped to it, greatly facilitating manufacture.

## Claims

1. A cord stopper (2) comprising a casing (4) having opposed apertures (10) for receiving a cord (14) and a slider (6) movable within the casing (4) under the action of a spring (8) to releasably trap the cord (14) between the slider (6) and an edge (18) of the apertures (10), **characterised in that** the cord stopper (2) further comprises a clip (20) for attaching the cord stopper (2) to a garment (38), bag or other item on which the cord stopper (2) is to be used.

2. A cord stopper (2) as claimed in claim 1 in combination with a garment (38), bag or other item which incorporates a loop (32), the clip (20) being used to clip the cord stopper (2) to the loop (32).

3. A cord stopper (2) as claimed in claim 1 or 2, wherein the clip (20) is integrally formed with the casing (4) of the cord stopper (2).

4. A cord stopper (2) as claimed in claim 1, 2 or 3, wherein the clip (20) comprises two overlapping arms (24, 28), and a loop of material (32) or the like can be slid between the overlapping portions of the arms (24, 28) to attach the cord stopper (2).

5. A cord stopper (2) as claimed in any one of claims 1 to 4, having two clips.

## Patentansprüche

1. Kordelstopper (2), welcher eine Hülse (4) mit einander gegenüberliegenden Öffnungen (10) zum Aufnehmen einer Kordel (14) und einen Schieber (6) beinhaltet, welcher innerhalb der Hülse (4) unter der Einwirkung einer Feder (8) bewegbar ist, um die Kordel (14) zwischen dem Schieber (6) und einem Rand (18) der Öffnungen (10) lösbar festzuhalten, **dadurch gekennzeichnet, dass** der Kordelstopper (2) außerdem einen federnden Verschluss (20) zum Festmachen des Kordelstoppers (2) an einem Kleidungsstück (38), einer Tasche oder einem anderen Ding beinhaltet, an welchem der Kordelstopper (2) verwendet werden soll.

2. Kordelstopper (2) nach Anspruch 1, in Kombination mit einem Kleidungsstück (38), einer Tasche oder einem anderen Ding, welche eine Schlaufe (32) einschließen, wobei der federnde Verschluss (20) verwendet wird, um den Kordelstopper (2) an die Schlaufe (32) zu klammern.

3. Kordelstopper (2) nach Anspruch 1 oder 2, wobei der federnde Verschluss (20) als Teil der Hülse (4) des Kordelstoppers (2) ausgeformt ist.

4. Kordelstopper (2) nach Anspruch 1, 2 oder 3, wobei der federnde Verschluss (20) zwei übereinander greifende Arme (24, 28) beinhaltet und eine Materialschlaufe (32) oder dergleichen sich zwischen die übereinander greifenden Teile der Arme (24, 28) schieben lässt, um den Kordelstopper (2) festzumachen.

5. Kordelstopper (2) nach einem der Ansprüche 1 bis 4, welcher zwei federnde Verschlüsse (20) besitzt.

## Revendications

1. Dispositif de blocage (2) de cordon comprenant un boîtier (4) ayant des ouvertures opposées (10) pour recevoir un cordon (14) et un curseur (6) mobile à l'intérieur du boîtier (4) sous l'action d'un ressort (8) pour piéger de manière réversible le cordon (14) entre le curseur (6) et un bord (18) des ouvertures (10), **caractérisé en ce que** le dispositif de blocage (2) de cordon comprend en outre une pince (20) pour attacher le dispositif de blocage (2) de cordon à un vêtement (38), un sac ou autre article sur lequel le dispositif de blocage (2) de cordon doit être utilisé.

2. Dispositif de blocage (2) de cordon selon la revendication 1, en association avec un vêtement (38), un sac ou autre article qui comporte une boucle (32), la pince (20) étant utilisée pour attacher le dispositif de blocage (2) de cordon à la boucle (32).

3. Dispositif de blocage (2) de cordon selon la revendication 1 ou 2, dans lequel la pince (20) est formée d'un seul tenant avec le boîtier (4) du dispositif de blocage (2) de cordon.

4. Dispositif de blocage (2) de cordon selon la revendication 1, 2 ou 3, dans lequel la pince (20) comprend deux bras se chevauchant (24, 28), et une boucle de matière (32) ou similaire peut être glissée entre les parties se chevauchant des bras (24, 28) pour attacher le dispositif de blocage (2) de cordon.

5. Dispositif de blocage (2) de cordon selon l'une quelconque des revendications 1 à 4, comportant deux pinces (20).
